# EUROPÄISCHE PATENTSCHRIFT

(11) **EP 0 913 974 B1**
(45) Veröffentlichungstag und Bekanntmachung des Hinweises auf die Patenterteilung: **07.11.2001**
(21) Anmeldenummer: 97810810.8
(22) Anmeldetag: 31.10.1997
(51) Int. Cl.: H04L 29/06, H04H 7/00, H04H 1/02

(54) **Verfahren zur Erstellung von Sendeplänen für Multi Media Daten**
Method to create a send planning for multimedia data
Méthode pour créer un planning d'envoi de données multimédias

(43) Veröffentlichungstag der Anmeldung: 06.05.1999
(73) Patentinhaber: Sohard AG, 3006 Bern (CH)
(72) Erfinder: Bouquet, Hanspeter, 3032 Hinterkappelen (CH); Weiss, Thomas, 3415 Hasle (CH); Jaun, Hermann, 3210 Kerzers (CH); Zubler, Christoph, 3110 Münsingen (CH)
(74) Vertreter: BOVARD AG - Patentanwälte

(56) Entgegenhaltungen:
- EP-A- 0 355 697
- EP-A- 0 394 939
- WO-A-97/27546
- RAMANATHAN S ET AL: "ARCHITECTURES FOR PERSONALIZED MULTIMEDIA" IEEE MULTIMEDIA, Bd. 1, Nr. 1, 21. März 1994, Seiten 37-46, XP000440887

## Beschreibung

Die vorliegende Erfindung betrifft ein Verfahren und ein System zur Erstellung von Sendeplänen für Multi Media Daten und zum Senden von Multi Media Daten zusammen mit einem audio- oder audiovisuellen Programm über einen Broadcastkanal.

Die Multi Media Daten werden im allgemeinen im "pull mode" übertragen: sie bleiben in einem Server, der mit einem Telekommunikationsnetz verbunden ist, gespeichert, bis sie ein Empfänger in eine Datenendeinrichtung lädt, beispielsweise einen PC, der ebenfalls an das Netz angeschlossen ist. Dies ist beispielsweise im allgemeinen der Fall bei den Multi Media Daten, die über das Internet übertragen werden. Diese Übertragungsart im "pull mode" erfordert somit die aktive Teilnahme des Empfängers, der selbst darüber entscheiden muss, welche Daten er empfangen möchte.

Diese aktive Suche ist allerdings nur möglich, wenn die Daten über ein bidirektionales Telekommunikationsnetz, im allgemeinen über das Telefonnetz, übertragen werden. Die Befehle zur Auswahl und Anzeige, die vom Empfänger gegeben werden, müssen nämlich zum Server übertragen werden, der die gewünschte Information speichert. Es ist ferner ein Mindestmass an Kenntnissen der Informatik und ein manchmal grosser Zeitaufwand seitens des Empfängers erforderlich, der eine aktive Rolle bei der Auswahl und Entscheidung für die empfangenen Objekte spielt.

Neben diesen "pull mode" Systemen sind in der letzten Zeit die sogenannten "push mode" oder "broadcasting" Systeme entstanden, bei denen die Multi Media Information von einem Server zu den Empfängern gesandt wird, die diese passiv empfangen. Diese Information kann je nach System in der Datenendeinrichtung des Empfängers gespeichert und/oder gefiltert werden, welcher auf diese Weise die Informationen auswählt, die ihn interessieren. Beispielsweise kann ein komplettes Informationsprogramm an den Empfänger übertragen werden, der entscheidet, nur die Informationen betreffend Sport oder Politik anzuzeigen oder zu speichern. Diese Systeme sind somit besonders für monodirektionale Telekommunikationsnetze mit grosser Bandbreite geeignet, bei denen die Verrechnung weder von der Anschlussdauer noch vom übertragenen Informationsvolumen abhängt.

Es ist auch schon bekannt, Multi Media Daten einem Radio- oder Fernsehprogramm hinzuzufügen. Bei den Femsehsystemen können somit digitale Daten, die Multi Media Objekten entsprechen, während des vertikalen Rasterintervalls übertragen werden. Eine entsprechende Hardware- und Softwarevorrichtung in dem Fernseher oder dem PC des Empfängers ermöglicht es, diese digitalen Daten zu decodieren, sie auszuwählen und zu speichern oder auf dem Bildschirm des Empfängers anzuzeigen. In den Radiosystemen wird die Übertragung von Multi Media Daten zusätzlich zu den Radioprogrammen vor allem mit den digitalen Radiosystemen DAB (Digital Audio Broadcasting) verwendet. Die DAB Technologie ermöglicht es auf diese Weise, sowohl Radioprogramme als auch programmbegleitende Dienste (Program Associated Data, PAD) und programmunabhängige Datenrundfunkdienste zu übertragen. DAB-Empfänger, die einen Datendecoder und eine entsprechende Anzeige enthalten, werden schon angeboten.

Programmbegleitende Dienste sind Informationen, die in direktem Zusammenhang zum ausgestrahlten Audioprogramm stehen. Zahlreiche Dienste können vorbereitet und ausgesandt werden, wie zum Beispiel Liedertitel, Standbilder, Schlagzeilen zu den Hörfunknachrichten, aktuelle Wetterkarten, Soundfiles, die im Empfänger zwischengespeichert werden und bei Bedarf abgerufen werden können usw.

Unter den Begriff Datenrundfunk fallen alle Dienste, die in keinem direkten Zusammenhang zum Audioprogramm stehen. Diese Informationen können zum Beispiel Verkehrsinformationen, Flug- und Fahrpläne, einen separaten Nachrichtendienst usw. enthalten.

Multi Media Daten werden auch im "push mode" über andere Kanäle und auch über Internet oder andere bidirektionale Telekommunikationssysteme verbreitet. Das Volumen der Multi Media Daten, die durch verschiedene Kanäle verbreitet werden, steigt somit ständig.

Ein Kennzeichen der "push mode" Technologien besteht darin, dass die verbreiteten Informationen vom Sender und nicht vom Empfänger ausgewählt werden. Der Sender muss somit einen Sendeplan erstellen, der beispielsweise definiert, welche Multi Media Daten zu welchem Zeitpunkt verbreitet werden.

In der Patentanmeldung WO 97/27546 werden ein System und Verfahren für die Datenkommunikation beschrieben, durch welche on-line Netzwerke mit on-line und off-line Computern verbunden werden. Gemäss der Lehre von WO 97/27546 werden Ankündigungen von (neuen) aktuellen Informationen, die Multi Media Daten enthalten können, innert Minutenfrist über einen drahtlosen Broadcastkanal an drahtlose Empfangsgeräte übermittelt, die jeweils mit einem Personal Computer (PC) eines Benutzers verbunden sind. Mit den Ankündigungen werden jeweils auch Intemetadressen übertragen, so dass der Benutzer mittels seines PCs eine Festnetzverbindung zu der Informationsquelle erstellen und Details der angekündigten Informationen beziehen kann. Das System gemäss WO 97/27546 umfasst eine Teilnehmerdatenbank und ist in der Lage, Informationen und Ankündigungen gezielt an adressierte Teilnehmer zu übermitteln, wobei der Zeitpunkt und die Adressaten einer Informationsübermittlung in Abhängigkeit des Typs der Informationen und basierend auf Angaben in der Teilnehmerdatenbank bestimmt werden.

Im Dokument XP000440887, "Architectures for Personalized Multimedia", Ramanathan S. et al., IEEE Multimedia, Bd. 1, Nr. 1, 21. März 1994, werden verschiedene Netzwerkarchitekturen und Caching-Methoden für die benutzerspezifische Verbreitung von Multi Media Daten beschrieben. Gemäss XP000440887 werden die von einem Benutzer bevorzugten Daten anfänglich durch sogenannte User Agents aus den vom Benutzer bereits gewählten Dateninhalten hergeleitet. Gemäss XP000440887 können jeweils auch die von einem Benutzer bevorzugten Zeitpunkte bestimmt werden, während denen er auf die von ihm gewünschten Daten zugreift, und dementsprechend die gewünschten Daten für diese Zeitpunkte in einem Cache-Speichers eines Servers gespeichert werden, der für den betreffenden Benutzer zugänglich ist.

In der Patentanmeldung EP 355 697 A2 wird ein bidirektionales Broadcastsystem für Multi Media Daten beschrieben, in welchem das Kopfende (head end) des Broadcastsystems zusätzlich zu einer Multimediaprogrammdatenbank und einer Werbedatenbank mit Mitteln versehen ist, die es Teilnehmern ermöglichen im Broadcastsystem Modi zu spezifizieren und abzuspeichern, gemäss welchen Werbesegmente aus der Werbedatenbank benutzerspezifisch in Multimediaprogramme aus der Multimediaprogrammdatenbank eingeführt und an den betreffenden Teilnehmer übermittelt werden. Ein Benutzer kann beispielsweise spezifizieren, dass keine Werbung eingeführt wird, was einen hohen Preis für den Bezug des Multimediaprogramms bewirkt, oder der Benutzer kann spezifizieren, dass die Werbung zwischen verschiedene Multimediaprogramme oder innerhalb eines Multimediaprogramms eingefügt wird, was jeweils eine Reduzierung des Preises für den Bezug des Multimediaprogramms bewirkt.

In der Patentanmeldung EP 394 939 A2 werden ein Verfahren und System für die Steuerung und Übertragung von Broadcastprogrammen beschrieben, in welchen ein beispielsweise wöchentlicher Plan mit den auszusendenden Broadcastprogrammen durch einen Scheduling Computer auf mehrere Gerätekontroller von Programmgenerierungsvorrichtungen aufgeteilt wird, wobei die Zuteilung basierend auf Geräteidentifizierungen der Programmgenerierungsvorrichtungen vorgenommen wird. Als Beispiele für Programmgenerierungsvorrichtungen werden in EP 394 939 A2 ein Bildsystem für die Wiedergabe von digitalen unbewegten Bildern sowie von digitalen Audiodaten, und CART-Maschinen für das Auffinden von Videokassetten, das Einschieben aufgefundener Videokassetten sowie das Abspielen der darauf aufgenommenen gewünschten Videoprogramme angeführt.

Ein Ziel der vorliegenden Erfindung ist die Erleichterung der Erstellung eines solchen Sendeplans für Multi Media Daten, die dazu bestimmt sind, durch einen Broadcastkanal verbreitet zu werden.

Erfindungsgemäss werden diese Ziele mit Hilfe eines Verfahrens und einer Vorrichtung erreicht, die die Merkmale der entsprechenden Hauptansprüche aufweisen, wobei bevorzugte Ausführungsformen ferner in den Nebenansprüchen angeführt sind.

Die Erfindung wird mit Hilfe der als Beispiel angeführten und in den Figuren dargestellten Beschreibung besser verständlich, wobei:
Figur 1 eine schematische Ansicht des erfindungsgemässen Systems darstellt;
Figur 2 eine Bildschirmansicht zeigt, die von dem erfindungsgemässen Datenbank-Verwaltungsprogramm für Multi Media Objekte erzeugt wurde;
Figur 3 eine Bildschirmansicht darstellt, die von dem erfindungsgemässen Programm zur Erstellung eines Sendeplans erzeugt wurde.

Das erfindungsgemässe System umfasst im wesentlichen einen Sendeplanersteller 12, der vorzugsweise von einem Informatikserver gebildet wird, der speziell zu diesem Zweck mittels eines Programms programmiert wird, das auf einer Datenspeichereinheit, wie beispielsweise einer Diskette, Festplatte oder CD-Rom, gespeichert ist. Der Server umfasst im wesentlichen eine Objektdatenbank 6 und einen Objekt-Scheduler 8. Die Aufzeichnungen der Datenbank 6 werden von Multi Media Objekten jeden beliebigen Typs gebildet, beispielsweise festen oder beweglichen Bildern 1, HTML-Seiten 20, die über das Internet 2 zugänglich sind, Textdateien 3, Audiodateien, Videodateien, Programme, usw... Ein Multi Media Objekt in der Datenbank 6 kann auch von jeder beliebigen Kombination dieser Elemente gebildet werden, beispielsweise von einem Bild und einem zugehörigen Text. Es ist auch möglich, in der Datenbank 6 Objekte zu speichern, die selbst von einem oder mehreren Multi Media Objekten gebildet werden. Ferner ist es möglich, in der Datenbank 6 entweder die Objekte selbst oder einen Zeiger auf diese Objektebeispielsweise deren Adresse in der Festplatte des Servers 12 oder einen URL-Zeiger über das Internet 2 - zu speichern.

Eine Beschreibung 4 ist den Multi Media Objekten 1, 2, 3, die in die Datenbank eingeführt werden, zugeordnet. Diese Beschreibung ermöglicht es im wesentlichen, die Verwaltung, zum Beispiel die Auswahl und Suche, von Multi Media Objekten in der Datenbank 6 zu erleichtern.

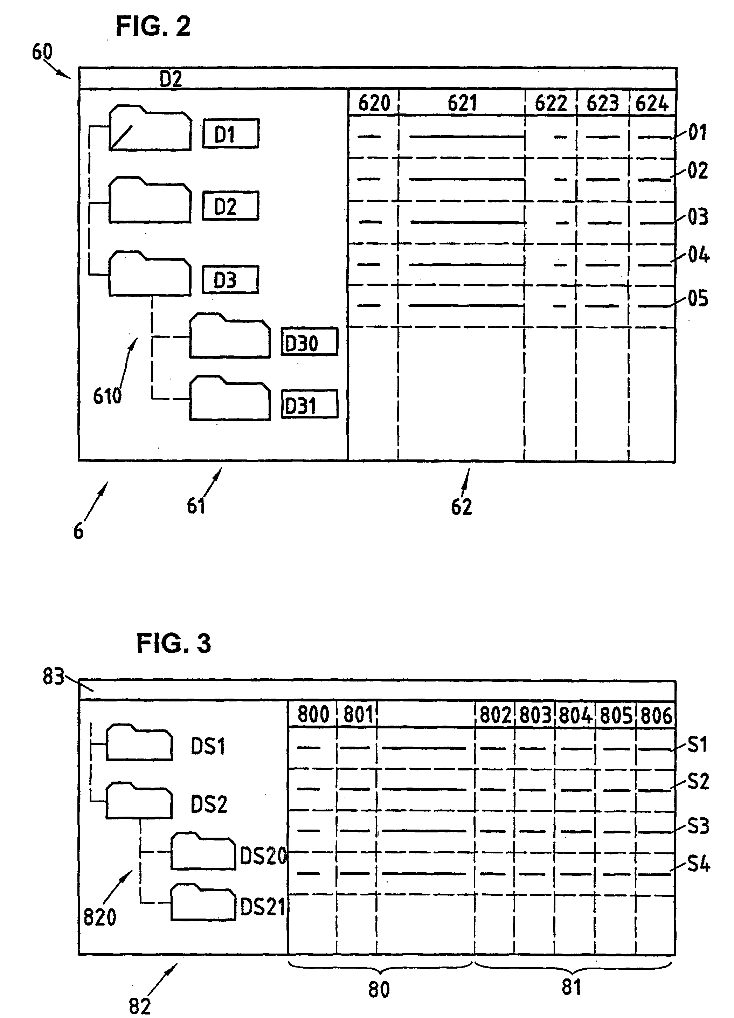

Figur 2 stellt eine Bildschirmansicht dar, die von dem Verwaltungsprogramm für die Datenbank 6 erzeugt wurde. Der linke Teil 61 des Bildschirms zeigt eine Liste 610 von Dossiers für Objekte D1, D2, D3, D30, D31 an. Jedes Dossier kann eine variable Anzahl von Objekten oder Unterdossiers enthalten; beispielsweise enthält das Dossier D3 die Unterdossiers D30 und D31. Der Operator kann sich in dieser Struktur mit Hilfe der Tastatur oder der Maus des Servers 12 wie in einem herkömmlichen Dateienverzeichnis bewegen. Ebenso ist es möglich, Dossiers in dieser verzweigten Struktur hinzuzufügen, wegzulassen oder zu ersetzen und Objekte in jedes beliebige Dossier durch jede beliebige bekannte Technik einzusetzen.

Die Merkmale der in dem ausgewählten Dossier enthaltenen Objekte, in dem dargestellten Beispiel das Dossier D2, werden im rechten Teil 62 des Bildschirms angezeigt. Die Bezeichnung dieses Dossiers wird ferner in der Kopfzeile 60 des Bildschirms angezeigt. In dem angezeigten Beispiel enthält das Dossier D2 5 Objekte O1 bis O5. Eine erste Spalte 620 gibt den Typ jedes Objekts an - beispielsweise ein GIF-Bild, ein Word-Text oder eine HTML-Seite. Die zweite Spalte 621 enthält eine Bezeichnung des Objekts, beispielsweise den Titel, der dem Dokument gegeben wurde. Eine Kurzbezeichnung in einigen Buchstaben kann ferner vorzugsweise in der Spalte 622 angegeben werden, sowie eine Nummer in der Spalte 623. Die Spalte 624 enthält schliesslich beispielsweise den Namen des Autors oder der für dieses Objekt verantwortlichen Person.

Weitere Merkmale können auch mit jedem Objekt verbunden werden, auf derselben Editierungsmaske oder mit Hilfe eines weiteren, nicht dargestellten Fensters. Beispielsweise ist es möglich, die Grösse des Objekts in Kbyte, den Namen der Datei oder der zugehörigen URL-Adresse, die Zeit für den Erhalt des Objekts in Millisekunden, das Erstellungsdatum oder das Datum der letzten Druckaufbereitung usw. anzugeben.

Erfindungsgemäss ist eine Beschreibung im Textmodus ferner jedem Objekt mit Hilfe eines Texteditors, der nicht dargestellt ist, zugeordnet. Diese Beschreibung wird vorzugsweise zum Zeitpunkt der Einführung eines Objektes in die Datenbank 6 hinzugefügt oder kann später aufbereitet oder verändert werden. Diese Beschreibung im Textmodus ermöglicht es im wesentlichen, die Verwaltung, insbesondere das Sortieren, die Filterung und die Suche der Objekte in der Datenbank 6 zu erleichtern. Es ist somit möglich, Objekte, einschliesslich Objekte vom Typ Bild, Audio oder Internetsite, mit Hilfe deren zugeordneter Beschreibung und mittels herkömmlicher Textmanipulationsfunktionen leicht handzuhaben.

Die Objekte in der Objektliste haben einen zugeordneten Typen, beispielsweise den GIF-Typ für ein Bild oder TXT für einen ASCII-Text, der in der Spalte 620 angegeben ist. Ein Programm zur Objekteditierung ist vorzugsweise für die gewöhnlichsten Typen vorgesehen, beispielsweise ein Texteditor für die Objekte vom Texttyp oder ein Zeichenprogramm für die Objekte vom Bildtyp. Durch Klicken mit der Maus auf ein mit einem vorbestimmten Typ verbundenes Objekt wird das zugehörige Programm ausgeführt und das ausgewählte Objekt in diesem Programm geöffnet. Es ist auch möglich, eine Anzeigefunktion vorzusehen, mit Hilfe eines Anzeigeprogramms, das an jeden Typ angepasst ist und durch eine entsprechende Betätigung der Maus oder der Tastatur gestartet wird.

Die Objekte der Datenbank 6 können durch jedes beliebige manuelle oder automatische Auswahlwerkzeug 7, beispielsweise durch "drag and drop", ausgewählt und im Sendeplan 8 angeordnet werden. Die Auswahlwerkzeuge können beispielsweise Sortier- oder Suchwerkzeuge nach einem Namen oder einem besonderen Kriterium umfassen, das aus der Beschreibung oder einem der Felder 620 bis 624 entnommen wurde, die jedem Objekt zugeordnet sind. Beispielsweise ist es möglich, manuell oder automatisch alle Objekte zu suchen und auszuwählen, die sich auf einen gegebenen Musiker beziehen, um die Sendung dieser Objekte gleichzeitig mit der Sendung der Stücke dieses Musikers auf dem zugehörigen Radiokanal vorzubereiten.

Das Programm zur Steuerung der Datenbank 6 umfasst vorzugsweise Mittel, um die Objekte nach ihrem Datum zu ordnen oder um die ältesten Objekte zu suchen, um aus der Datenbank die älteren Objekte auszuschliessen oder um die ungültig gewordenen URL-Verbindungen wegzulassen.

Figur 3 stellt eine Bildschirmansicht dar, die vom Programm zur Verwaltung des Sendeplans 8 erzeugt wurde. Der linke Teil 82 des Bildschirms zeigt eine Liste 820 von Dossiers für Schemata DS1, DS2, DS20, DS21 an. Jedes Dossier kann eine variable Anzahl von Schemata oder Unterdossiers enthalten: beispielsweise enthält das Dossier DS2 die Unterdossiers DS20 und DS21. Der Operator kann sich in dieser Struktur mit Hilfe der Tastatur oder der Maus des Servers 12 wie in einem herkömmlichen Dateienverzeichnis bewegen. Ebenso ist es möglich, in dieser verzweigten Struktur Dossiers hinzuzufügen, wegzulassen oder zu verschieben und Objekte in jedes beliebige Dossier durch jede beliebige bekannte Technik einzusetzen.

Ein Sendeplan besteht aus einem oder mehreren Schemata, die zwischen mehreren Dossiers DS1 bis DS21 verteilt sind. Ein Schema umfasst selbst ein oder mehrere Multi Media Objekte, die aus der Datenbank 6 gewonnen wurden, beispielsweise eine Folge von HTML-Seiten mit Bildern, die durch Hyperlinks verbunden sind. Überdies umfasst das erfindungsgemässe Schema Sendekriterien für diese Objekte.

Die Objekte, die ein Schema bilden, werden mit Hilfe einer nicht dargestellten Tabelle, die jedem Schema zugeordnet ist, ausgewählt; ein neues Objekt kann in diese Tabelle eingesetzt werden und einem bestehenden Schema durch "drag & drop" oder durch "cut & paste" über das "clipboard" zugeordnet werden. Die folgenden Plausibilitätsprüfungen werden bei der Einführung eines Objekts in ein Schema durchgeführt:
- Grösse des Objekts: die Objekte, die grösser als eine gewisse Grösse in Byte sind, können nicht in ein Schema eingeführt werden;
- Name des Objekts: falls sich der Name beispielsweise auf eine MS-DOS-Datei bezieht, ist es möglich, zu überprüfen, ob der Name maximal 8 Symbole und eine Erweiterung von maximal 3 Symbolen umfasst;
- maximale Auflösung im Falle eines Bildobjekts, welche die Auflösung der Empfänger nicht überschreiten darf;
- Format des Objekts, da die Objekte unbekannten Typs nicht gesandt werden können.

Mittel zur automatischen oder halbautomatischen Einführung von Objekten in ein Schema können im Rahmen dieser Erfindung vorgesehen werden. Beispielsweise ist es möglich, Suchkriterien einem Schema zuzuordnen und in dieses Schema automatisch oder auf Antrag des Operators alle Objekte in dem Sendeplan 8, die diesen Kriterien entsprechen, einzusetzen.

Die Merkmale der Schemata sind im ausgewählten Dossier enthalten, im dargestellten Beispiel im Dossier DS20, und werden im rechten Teil 80, 81 des Bildschirms angezeigt. Die Bezeichnung dieses Dossiers wird ferner in der Kopfzeile 83 des Bildschirms angezeigt. Im dargestellten Beispiel enthält das Dossier DS20 4 Schemata S1 bis S4. Eine erste Spalte 800 gibt die Indexnummer an, die jedem Schema zugeordnet ist; die zweite Spalte 801 gibt die Bezeichnung des Schemas an; falls das Schema nur ein Objekt umfasst, kann diese Bezeichnung vorteilhafterweise dieselbe wie jene des Objekts sein.

Die Spalte 802 gibt sodann das Sendekriterium des Schemas an. Dieses Kriterium kann einen der folgenden Werte annehmen:
- zeitgesteuert: das Schema wird nun zu der Uhrzeit und an dem Datum gesandt, die in der Spalte 803 angeführt sind;
- sendeplangesteuert: das Schema wird in Abhängigkeit von Ereignissen gesandt, die mit dem Sendeplan 92 der den Multi Media Objekten hinzugefügten Radio- oder TV-Daten verbunden sind. Beispielsweise kann ein Schema, das Objekte in Zusammenhang mit einem Musiker enthält, derart programmiert werden, dass es gesandt wird, wenn Stücke von diesem Musiker gespielt werden, oder kann eine Wetterkarte automatisch gesandt werden, wenn in dem zugehörigen Radioprogramm Wetterinformationen gegeben werden. Das Senden wird vorzugsweise von einem Signal der Sendeablaufsteuerung (SAST) gesteuert, die nicht dargestellt ist.
- Intervall: das Schema wird in regelmässigen Abständen gesandt, ab dem Datum und der Uhrzeit, die in Spalte 803 angeführt sind, sooft, wie in Spalte 804 angegeben und mit einem Intervall zwischen dem jeweiligen Senden, der in Spalte 805 angegeben ist. Es ist beispielsweise möglich, ein Senden eines Schemas täglich um 12h30 vorzusehen;
- Havarie: das Schema wird bei technischen Problemen beliebigen Typs, die beispielsweise mit dem Radiosender in Zusammenhang stehen, gesandt. Das Schema kann nun beispielsweise eine Entschuldigungsmeldung des Programmproduzenten und Anweisungen umfassen, um trotzdem das Programm auf einer anderen Frequenz empfangen zu können. Falls mehrere Schemata mit dem Kriterium Havarie vorgesehen sind, wird jenes Schema gesandt, das die nächste vorgesehene Sendezeit besitzt Es ist somit möglich, eine weitere Havariemeldung beispielsweise während des Tages oder der Nacht vorzusehen.
- Kontaktgesteuert: das Schema wird nun gesandt, sobald ein zufälliges äusseres Ereignis im Server eintritt; beispielsweise auf einfachen Tastendruck durch den Operator.

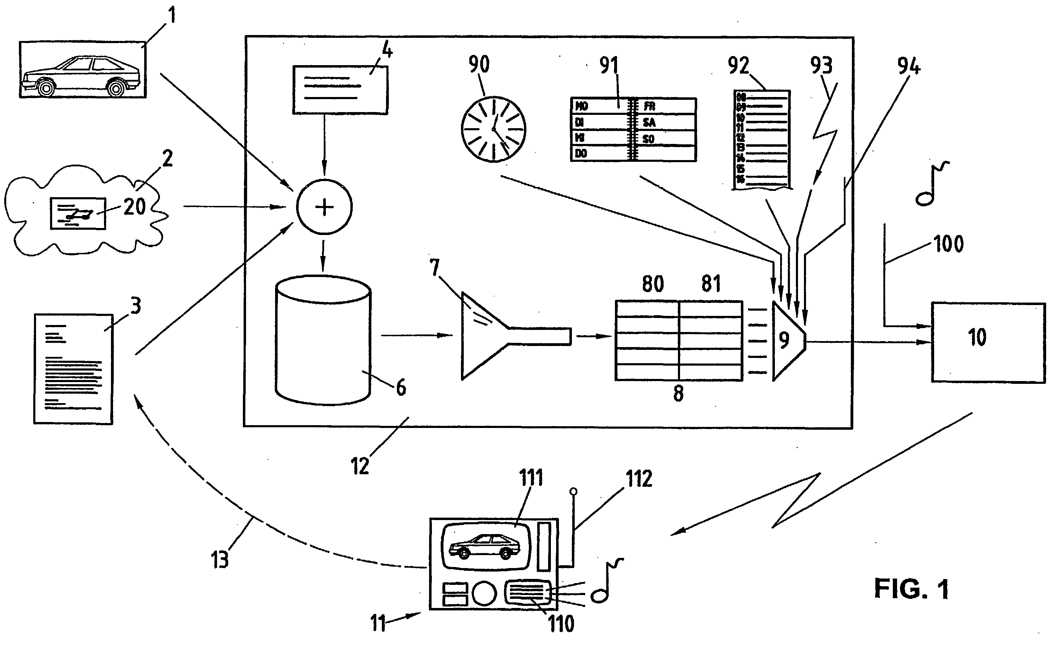

Diese Sendekriterien sind in Figur 1 durch die Symbole 90 bis 94, die mit dem Multiplexing-Element 9 verbunden sind, symbolisch dargestellt.

Falls ein Schema mehrere Objekte umfasst, beispielsweise mehrere HTML-Seiten oder mehrere Bilder, werden diese Objekte in der Reihenfolge gesandt, in der sie in das Schema eingeführt wurden. Bei einer Variante ist es auch möglich, Mittel vorzusehen, die es ermöglichen, eine andere Sendereihenfolge einzugeben.

Der Sendeplan enthält folglich keine festen Tagesraster, sondern unabhängige Schemata, welche mit den Aussendebedingungen den Tagesablauf bilden.

Es ist möglich, die gleichzeitige Aussendung von zwei oder mehreren Schemata in einem Sendeplan vorzusehen. Beispielsweise kann es sein, dass ein regelmässig ausgesandtes Schema durch ein Schema unterbrochen wird, das nach einem zufälligen Ereignis, das mit dem Audio-Sendeplan in Verbindung steht, ausgesandt wird. Um die möglichen Konflikte zu lösen, ist es möglich, jedem Schema in der Spalte 806 eine Priorität zuzuordnen. Die Priorität kann von einem oder mehreren Bit gebildet werden, die es nun ermöglichen, mehrere Prioritätsniveaus zu definieren. Auf diese Weise werden die Objekte, die eine hohe Priorität aufweisen, anstelle von Objekten mit geringerer Priorität gesandt, wenn ein Konflikt besteht. Im Falle gleicher Priorität ist es vorteilhaft vorzusehen, dass die bereits begonnene Aussendung eines Objekts nicht durch die Aussendung eines neuen Objekts unterbrochen wird, oder bei gleichzeitigem Aussendebeginn, dass das kleinere Objekt prioritär ausgesandt wird.

Ausserdem sind vorzugsweise Mittel vorhanden, um die zu übertragende Datenmenge mit der Übertragungskapazität und Bandbreite des Sendekanals zu vergleichen. Wenn die vorgesehene Datenmenge diese Übertragungskapazität übersteigt, wird vorzugsweise der Benutzer aufgefordert, Prioritäten dem verantwortlichen Schema zuzuordnen, oder die Aussendekriterien für diese Schemata zu ändern. In einer Variante werden automatisch Prioritäten zugeordnet.

Die durch die Multiplexing- und Sequenzierungsmittel 9 ausgewählten Objekte werden durch jeden beliebigen Push-Kanal ausgesandt, beispielsweise in Verbindung mit einem Radio-Audio-Programm 100 in einem DAB-Kanal, und durch den Sender 10 über Funkweg oder terrestrischen Weg zu der Datenendeinrichtung 11 des Empfängers gesandt. Die Datenendeinrichtung 11 ist vorzugsweise mit einer Antenne 112 oder einem geeigneten Empfangsmittel für die Sendungen des Senders 10 sowie mit einem Bildschirm 111 und einem Lautsprecher 110 für das Audioprogramm des Senders 10 versehen. Ein nicht dargestellter Decoder entnimmt dem Radioprogramm die Multi Media Daten, um sie je nach ihrem Typ anzuzeigen. Im Falle von Objekten vom Typ HTML-Seiten umfasst der Decoder vorzugsweise einen Browser bekannten Typs, um diese Seiten anzuzeigen und ein Weitergehen von einer Seite zur anderen zu ermöglichen. Da die Multi Media Daten vom Sender 10 kontinuierlich ausgesandt werden, umfasst die Datenendeinrichtung vorzugsweise einen Cache-Speicher, um die erhaltenen Multi Media Objekte zu speichern, und Auswahlmittel, um die Objekte in dem Cache-Speicher in Abhängigkeit von den vom Empfänger ausgewählten Kriterien wiederzufinden oder auszuwählen. Es ist auch möglich, in dem Cache-Speicher nur die Objekte zu speichern, die den Empfänger interessieren, beispielsweise könnten alle Objekte, die mit der Politik in Zusammenhang stehen, aufbewahrt werden, während die, die sich auf den Sport beziehen, ausgeschlossen würden.

Die Datenendeinrichtung 11 kann als Option nicht dargestellte Kommunikationsmittel umfassen, um direkt auf die ausgesandten Objekte 1, 2, 3 einzuwirken. Beispielsweise kann die Vorrichtung 11 einen Intemetanschluss 13 über ein Modem oder einen Router umfassen, um die HTML-Seiten 20 im Internet 2 zu bearbeiten oder um auf Angebote auf diesen Seiten zu antworten. In diesem Fall ist es möglich, HTML-Seiten auszusenden, die URL-Verbindungen zu Standorten enthalten, die nur über diese Internet-Verbindung zugänglich sind.

Die von diesem Mittel ausgesandten Objekte können auch Bilder oder Texte umfassen, die Flexmart-Steuerzeilen enthalten. Das Flexmart-Verfahren ermöglicht es dem Empfänger, mit Hilfe eines Mobiltelefons Produkte zu bestellen, die in der Flexmart-Zeile gekennzeichnet sind, indem er sich gegenüber der Lieferfirma mit Hilfe der Identifikation eines Mobiltelefonteilnehmers, die in der SIM-Karte seines Mobiltelefons aufgezeichnet ist, identifiziert.

Die Erfindung ist von dem für die Multi Media Daten verwendeten Sendemittel unabhängig. Insbesondere kann die Erfindung auch verwendet werden, um Multi Media Daten in ein Fernsehprogramm einzufügen, wobei die Multi Media Objekte in diesem Fall vorzugsweise während der Intervalle der Vertikalerneuerung übertragen werden und auf dem Bildschirm des Fernsehers oder eines PC's angezeigt werden, die mit einem entsprechenden Decoder versehen sind. Die Erfindung kann ferner auch derart ausgeführt sein, dass Sendepläne für Multi Media Objekte vorbereitet werden, die im "push-mode" im Internet ausgesandt werden.

Wie bereits angeführt, ist der Sendeplanersteller 12 vorzugsweise mit Hilfe eines Informatikservers verwirklicht, der speziell für diesen Zweck programmiert ist, mit Hilfe eines Programms, das auf einer nicht dargestellten Datenspeichervorrichtung, wie beispielsweise einer Diskette, Festplatte oder CD-Rom, gespeichert ist. Der erzeugte Sendeplan, der von einer Menge von Schemata gebildet wird, die Objekte und entsprechende Sendekriterien umfassen, kann selbst in Form einer Informatikdatei auf einem solchen Speicherträger für seinen Transport oder seinen Vertrieb gespeichert werden. Eine Werbeagentur kann somit beispielsweise Teilsendepläne vorbereiten, die beispielsweise Bilder von Produkten eines Kunden und für diese Bilder gewünschte Sendekriterien umfassen, und diesen Teilplan an den Operator eines Senders 10 senden, damit dieser diesen Inhalt in sein Radio- oder TV-Programm einsetzt. In diesem Fall müssen nicht dargestellte Mittel in dem Ersteller 8 vorgesehen werden, um Teilsendepläne, die von verschiedenen Herstellern auf Diskette oder CD-Rom beispielsweise geliefert werden, zu lesen und zu kombinieren.

Die Datenbank von Multi Media Objekten 6 kann auf einem ersten Computer erstellt werden, um beispielsweise auf einen entsprechenden Träger zu einem zweiten Computer übertragen zu werden, der den Sendeplanersteller 12 enthält. Ferner kann das von dem Sender 10 erzeugte Programm selbst auf einem geeigneten Träger, wie beispielsweise einer Audio- oder Videokassette oder auf einer optischen Platte, gespeichert werden, der in der Lage ist, sowohl das Audio- oder Audio-visuelle-Programm 100 als auch die in diesem Programm integrierten Multi Media Objekte zu speichern, und der für sich allein vertrieben werden kann.

## Patentansprüche

1. Verfahren zur Erstellung von Sendeplänen für Multi Media Daten und zum Aussenden der Multi Media Daten in Verbindung mit einem Audioprogramm (100) oder einem Audio-visuellen-Programm über einen Broadcastkanal, welches Verfahren folgende Schritte umfasst:
mittels einer programmierten Einrichtung (12) Erstellung einer Datenbank (6), die Multi Media Objekte (1, 20, 3) enthält,
mittels einer programmierten Einrichtung (12) Erstellung eines Sendeplans (8), der eine Liste (80) von in der Datenbank (6) ausgewählten Multi Media Objekten und diesen Multi Media Objekten zugeordnete Sendekriterien (81) umfasst, wobei mindestens gewisse der Sendekriterien die Aussendung der betreffenden Multi Media Objekte abhängig von Ereignissen in Verbindung mit dem Audioprogramm oder dem Audio-visuellen-Programm machen, und
Aussenden der Multi Media Objekte in Verbindung mit dem Audioprogramm oder dem Audio-visuellen-Programm über den Broadcastkanal, wenn die Sendekriterien der betreffenden Multi Media Objekte erfüllt sind.

2. Verfahren nach dem vorhergehenden Anspruch, **dadurch gekennzeichnet, dass** die Multi Media Objekte im Sendeplan (8) in Schemata zusammengefasst werden, wobei ein Schema ein oder mehrere Objekte und ein zugehöriges Sendekriterium umfasst, dass mindestens gewissen Schemata ein Suchkriterium zugeordnet wird, und dass Multi Media Objekte, die diesem Suchkriterium entsprechen, automatisch in das betreffende Schema eingeführt werden.

3. Verfahren nach dem vorhergehenden Anspruch, **dadurch gekennzeichnet, dass** vor der Einführung eines Multi Media Objekts in ein Schema Plausibilitätsprüfungen durchgeführt werden, wobei die Grösse des betreffenden Multi Media Objekts, die Auflösung des betreffenden Multi Media Objekts, falls dieses vom Typ Bildobjekt ist, und/oder das Format des betreffenden Multi Media Objekts überprüft wird.

4. Verfahren nach einem der vorhergehenden Ansprüche, **dadurch gekennzeichnet, dass** mindestens gewissen Multi Media Objekten im Sendeplan (8) eine Priorität zugeordnet wird, und dass die Aussendung von Objekten geringer Priorität unterbrochen wird, wenn ein Objekt höherer Priorität gleichzeitig ausgesandt werden muss.

5. Verfahren nach einem der vorhergehenden Ansprüche, **dadurch gekennzeichnet, dass** die zu übertragende Datenmenge der Multi Media Objekte vor der Aussendung mit der Übertragungskapazität des Broadcastkanals verglichen wird.

6. Verfahren nach einem der vorhergehenden Ansprüche, **dadurch gekennzeichnet, dass** die Aussendung der Objekte durch ein Signal steuerbar ist, das von einer Sendeablaufsteuerung stammt.

7. Verfahren nach einem der vorhergehenden Ansprüche, **dadurch gekennzeichnet, dass** die Multi Media Daten als DAB-Datendienst in einem Radioprogramm (100) ausgesandt werden.

8. Verfahren nach einem der vorhergehenden Ansprüche, **dadurch gekennzeichnet, dass** die Multi Media Daten im "push-mode" über Internet ausgesandt werden.

9. Verfahren nach einem der vorhergehenden Ansprüche, **dadurch gekennzeichnet, dass** mindestens gewisse der Sendekriterien die Aussendung der betreffenden Multi Media Objekte abhängig von einem Tastendruck durch einen Operator oder abhängig von vordefinierten Zeit-Intervallen machen.

10. Verfahren nach einem der vorhergehenden Ansprüche, **dadurch gekennzeichnet, dass** die Multi Media Objekte Datenelemente vom Typ Bild (1), vom Typ Text (3), vom Typ Audio, vom Typ Video, vom Typ Programm, vom Typ Objekt und/oder vom Typ Zeiger, beispielsweise vom Typ URL-Zeiger, umfassen.

11. Verfahren nach einem der vorhergehenden Ansprüche, **dadurch gekennzeichnet, dass** mindestens gewisse Multi Media Objekte ein Flexmart-Element umfassen, welches Flexmart-Element ein bestellbares Produkt kennzeichnet.

12. Programmierbare Einrichtung (12) zur Erstellung von Sendeplänen für Multi Media Daten, die dazu bestimmt sind, in Verbindung mit einem Audioprogramm (100) oder einem Audio-visuellen-Programm über einen Broadcastkanal ausgesendet zu werden, welche programmierbare Einrichtung derart programmiert ist, dass sie die folgenden Schritte ausführt:
Erstellung einer Datenbank (6), die Multi Media Objekte (1, 20, 3) enthält, und
Erstellung eines Sendeplans (8), der eine Liste (80) von in der Datenbank (6) ausgewählten Multi Media Objekten und diesen Multi Media Objekten zugeordnete Sendekriterien (81) umfasst, wobei mindestens gewisse der Sendekriterien die Aussendung der betreffenden Multi Media Objekte abhängig von Ereignissen in Verbindung mit dem Audioprogramm oder dem Audio-visuellen-Programm machen.

13. Programmierbare Einrichtung nach dem vorhergehenden Anspruch, **dadurch gekennzeichnet, dass** sie derart programmiert ist, dass sie die Multi Media Objekte im Sendeplan (8) in Schemata zusammenfasst, wobei ein Schema ein oder mehrere Objekte und ein zugehöriges Sendekriterium umfasst, dass sie mindestens gewissen Schemata ein Suchkriterium zuordnet, und dass sie Multi Media Objekte, die diesem Suchkriterium entsprechen, automatisch in das betreffende Schema einführt.

14. Programmierbare Einrichtung nach dem vorhergehenden Anspruch, **dadurch gekennzeichnet, dass** sie derart programmiert ist, dass sie vor der Einführung eines Multi Media Objekts in ein Schema Plausibilitätsprüfungen durchführt, wobei die Grösse des betreffenden Multi Media Objekts, die Auflösung des betreffenden Multi Media Objekts, falls dieses vom Typ Bildobjekt ist, und/oder das Format des betreffenden Multi Media Objekts überprüft wird.

15. Programmierbare Einrichtung nach einem der Ansprüche 12 bis 14, **dadurch gekennzeichnet, dass** sie derart programmiert ist, dass sie mindestens gewissen Multi Media Objekten im Sendeplan (8) eine Priorität zuordnet, und dass sie die Aussendung von Objekten geringer Priorität unterbricht, wenn ein Objekt höherer Priorität gleichzeitig ausgesandt werden muss.

16. Programmierbare Einrichtung nach einem der Ansprüche 12 bis 15, **dadurch gekennzeichnet, dass** sie derart programmiert ist, dass sie die zu übertragende Datenmenge der Multi Media Objekte vor der Aussendung mit der Übertragungskapazität des Broadcastkanals vergleicht.

## Claims

1. Method of setting up broadcast programmes for multimedia data and of transmitting the multimedia data in connection with an audio programme (100) or an audiovisual programme through a broadcast channel, which method comprises the following steps:
by means of a programmed device (12), setting up a data base (6), which contains multimedia objects (1, 20, 3),
by means of a programmed device (12), drawing up a broadcast programme (8), which comprises a list (80) of multimedia objects selected in the data base (6), and transmission criteria (81) associated with these multimedia objects, at least certain of the transmission criteria making the transmission of the respective multimedia objects dependent upon events in connection with the audio programme or the audiovisual programme, and
transmission of the multimedia objects in connection with the audio programme or the audiovisual programme via the broadcast channel if the transmission criteria for the respective multimedia objects are fulfilled.

2. Method according to the preceding claim, **characterised in that** the multimedia objects in the broadcast programme (8) are combined in schemes, a scheme comprising one or more objects and an associated transmission criterion, **in that** a search criterion is assigned to at least certain schemes, and **in that** multimedia objects which correspond to this search criterion are automatically introduced into the respective scheme.

3. Method according to the preceding claim, **characterised in that** prior to introduction of a multimedia object into a scheme, plausibility checks are carried out, the size of the respective multimedia object, the resolution of the respective multimedia object, if this is of the picture object type, and/or the format of the respective multimedia object being checked.

4. Method according to one of the preceding claims, **characterised in that** a priority is assigned to at least certain multimedia objects in the broadcast programme (8), and **in that** the transmission of objects of lower priority is interrupted if an object of higher priority has to be transmitted at the same time.

5. Method according to one of the preceding claims, **characterised in that**, prior to the transmission, the quantity of data to be transmitted of the multimedia objects is compared with the transmitting capacity of the broadcast channel.

6. Method according to one of the preceding claims, **characterised in that** the transmission of the objects is controllable through a signal which originates from a transmission sequence control.

7. Method according to one of the preceding claims, **characterised in that** the multimedia data are transmitted as DAB data service in a radio programme (100).

8. Method according to one of the preceding claims, **characterised in that** the multimedia data are transmitted via the Internet in "push mode."

9. Method according to one of the preceding claims, **characterised in that** at least certain of the transmission criteria make the transmission of the respective multimedia objects dependent upon pressing of a button by an operator or dependent upon predefined time intervals.

10. Method according to one of the preceding claims, **characterised in that** the multimedia objects comprise data elements of the picture type (1), the text type (3), the audio type, the video type, the programme type, the object type and/or the marker type, for example of the URL marker type.

11. Method according to one of the preceding claims, **characterised in that** at least certain multimedia objects comprise a Flexmart element, which Flexmart element indicates a product able to be ordered.

12. Programmable device (12) for setting up broadcast programmes for multimedia data which are intended to be transmitted over a broadcast channel in connection with an audio programme (100) or an audiovisual programme, which programmable device is programmed in such a way that it carries out the following steps:
setting up a data base (6), which contains multimedia objects (1, 20, 3), and
drawing up a broadcast programme (8), which comprises a list (80) of multimedia objects selected in the data base (6) and transmission criteria (81) associated with these multimedia objects, at least certain of the transmission criteria making the transmission of the respective multimedia objects dependent upon events in connection with the audio programme or audiovisual programme.

13. Programmable device according to the preceding claim, **characterised in that** it is programmed in such a way that it combines the multimedia objects in the broadcast programme (8) into schemes, a scheme comprising one or more objects and an associated transmission criterion, **in that** it assigns a search criterion to at least certain schemes, and **in that** it automatically introduces multimedia objects that correspond to this search criterion into the respective scheme.

14. Programmable device according to the preceding claim, **characterised in that** it is programmed in such a way that, before the introduction of a multimedia object into a scheme, it carries out plausibility checks, the size of the respective multimedia object, the resolution of the respective multimedia object, if this is of the picture object type, and/or the format of the respective multimedia object being checked.

15. Programmable device according to one of the claims 12 to 14, **characterised in that** it is programmed in such a way that it assigns a priority to at least certain multimedia objects in the broadcast programme (8), and **in that** it interrupts the transmission of objects of lower priority if an object of higher priority has to be transmitted at the same time.

16. Programmable device according to one of the claims 12 to 15, **characterised in that** it is programmed in such a way that, prior to the transmission, it compares the quantity of data to be transmitted of the multimedia objects with the transmitting capacity of the broadcast channel.

## Revendications

1. Procédé d'établissement de programmes d'émission pour données multimédia et de diffusion des données multimédia, en liaison avec un programme audio (100) ou avec un programme audiovisuel, par l'intermédiaire d'un canal de radiodiffusion, ce procédé comprenant les étapes suivantes :
au moyen d'une installation programmée (12), création d'une banque de données (6) qui contient des sujets multimédia (1, 20, 3),
au moyen d'une installation programmée (12), établissement d'un programme d'émission (8) qui comprend une liste (80) de sujets multimédia sélectionnés dans la banque de données (6) et des critères d'émission (81) attribués à ces sujets multimédia, au moins certains des critères d'émission rendant la diffusion des sujets multimédia considérés fonction d'évènements en liaison avec le programme audio ou le programme audiovisuel, et
diffusion, par le canal de radiodiffusion, des sujets multimédia en liaison avec le programme audio ou le programme audiovisuel, si les critères d'émission des sujets multimédia considérés sont remplis.

2. Procédé selon la revendication précédente, **caractérisé en ce que** les sujets multimédia figurant dans le programme d'émission (8) sont groupés en schémas, un schéma comprenant un ou plusieurs sujets et un critère d'émission correspondant, **en ce qu'**un critère de recherche est attribué au moins à certains schémas et **en ce que** les sujets multimédia correspondant à ce critère de recherche sont introduits automatiquement dans le schéma considéré.

3. Procédé selon la revendication précédente, **caractérisé en ce que**, avant l'introduction d'un sujet multimédia dans un schéma, des contrôles de plausibilité sont effectués, la grandeur du sujet multimédia considéré, la résolution du sujet multimédia considéré s'il est du type pictural ou le format du sujet multimédia considéré, ou les deux, étant vérifiés.

4. Procédé selon l'une des revendications précédentes, **caractérisé en ce qu'**une priorité est attribuée au moins à certains sujets multimédia dans le programme d'émission (8) et **en ce que** la diffusion de sujets de faible priorité est interrompue si un sujet ayant une priorité supérieure doit être diffusé en même temps.

5. Procédé selon l'une des revendications précédentes, **caractérisé en ce que** la quantité de données des sujets multimédia qui doit être transmise est comparée, avant la diffusion, à la capacité de transmission du canal de radiodiffusion.

6. Procédé selon l'une des revendications précédentes, **caractérisé en ce que** la diffusion des sujets peut être commandée par un signal provenant d'un système de commande du déroulement de l'émission.

7. Procédé selon l'une des revendications précédentes, **caractérisé en ce que** les données multimédia sont envoyées en tant que service de données en radiodiffusion audionumérique (RAN ou DAB) dans un programme de radio (100).

8. Procédé selon l'une des revendications précédentes, **caractérisé en ce que** les données multimédia sont diffusées sur Intemet en "mode de poussée".

9. Procédé selon l'une des revendications précédentes, **caractérisé en ce qu'**au moins certains des critères d'émission font dépendre la diffusion des sujets multimédia considérés de l'actionnement d'une touche par un opérateur ou d'intervalles de temps déterminés.

10. Procédé selon l'une des revendications précédentes, **caractérisé en ce que** les sujets multimédia comprennent des éléments de données du type image (1), du type texte (3), du type audio, du type vidéo, du type programme, du type sujet ou du type identificateur, par exemple du type identificateur d'URL.

11. Procédé selon l'une des revendications précédentes, **caractérisé en ce qu'**au moins certains sujets multimédia comprennent un élément Flexmart, cet élément Flexmart caractérisant un produit qui peut être commandé.

12. Installation programmable (12) destinée à établir des programmes d'émission pour données multimédia destinées à être émises, en liaison avec un programme audio (100) ou avec un programme audiovisuel, sur un canal de radiodiffusion, cette installation programmable étant programmée de telle manière qu'elle exécute les opérations suivantes :
Création d'une banque de données (6) contenant des sujets multimédia (1, 20, 3), et
Création d'un programme d'émission (8) comprenant une liste (80) de sujets multimédia sélectionnés dans la banque de données (6) et des critères d'émission (81) attribués à ces sujets multimédia, au moins certains des critères d'émission rendant la diffusion des sujets multimédia considérés fonction d'évènements en liaison avec le programme audio ou le programme audiovisuel.

13. Installation programmable selon la revendication précédente, **caractérisée en ce qu'**elle est programmée de telle façon qu'elle regroupe dans des schémas les sujets multimédia figurant dans le programme d'émission (8), un schéma comprenant un ou plusieurs sujets et un critère démission correspondant, **en ce qu'**elle attribue un critère de recherche au moins à certains schémas et **en ce qu'**elle introduit automatiquement dans le schéma approprié les sujets multimédia qui correspondent à ce critère de recherche.

14. Installation programmable selon la revendication précédente, **caractérisée en ce qu'**elle est programmée de telle façon que, avant l'introduction d'un sujet multimédia dans un schéma, elle effectue des contrôles de plausibilité, avec en même temps une vérification de la grandeur du sujet multimédia considéré, de la résolution du sujet multimédia considéré s'il est du type sujet pictural ou du format du sujet multimédia considéré, ou des deux.

15. Installation programmable selon l'une des revendications 12 à 14, **caractérisée en ce qu'**elle est programmée de telle façon qu'elle attribue une priorité au moins à certains sujets multimédia dans le programme d'émission (8) et **en ce qu'**elle interrompt la diffusion de sujets ayant une faible priorité si un sujet de priorité supérieure doit être diffusé en même temps.

16. Installation programmable selon l'une des revendications 12 à 15, **caractérisée en ce qu'**elle est programmée de telle façon que, avant la diffusion, elle compare la quantité de données des sujets multimédia à transmettre et la capacité de transmission du canal de radiodiffusion.
